# EUROPEAN PATENT SPECIFICATION

(11) **EP 1 737 645 B1**
(45) Date of publication and mention of the grant of the patent: **13.08.2008**
(21) Application number: 04723305.1
(22) Date of filing: 25.03.2004
(51) Int. Cl.: B29C 65/80, B29C 65/02, B65B 3/02, B65B 43/50

(54) **TRANSFER STAR-WHEEL, IN PARTICULAR FOR FLEXIBLE CONTAINERS, AND METHOD FOR COOLING SAID CONTAINERS**
TRANSFERSTERNRAD, INSBESONDERE FÜR FLEXIBLE BEHÄLTER, UND VERFAHREN ZUM KÜHLEN DER BEHÄLTER
ETOILE DE TRANSFERT DESTINEE EN PARTICULIER A DES CONTENANTS SOUPLES, ET PROCEDE DE REFROIDISSEMENT DESDITS CONTENANTS

(43) Date of publication of application: 03.01.2007
(73) Proprietor: INDAG Gesellschaft für Industriebedarf mbH & Co. Betriebs KG, 69214 Eppelheim (DE)
(72) Inventor: FURLOTTI, Filippo, I-43100 Parma (IT)
(74) Representative: Grünecker, Kinkeldey, Stockmair & Schwanhäusser Anwaltssozietät
(86) International application number: PCT/IT2004/000152
(87) International publication number: WO 2005/092597

(56) References cited:
- EP-A- 1 127 793
- CH-A- 689 007
- GB-A- 925 169
- US-A- 3 216 874
- US-A- 3 802 942
- US-A- 4 640 406

## Description

### TECHNICAL FIELD AND BACKGROUND ART.

The present invention relates to a transfer star-wheel, in particular for flexible containers, and a method for cooling said containers.

As is well known, in the sector of the production and filling of flexible containers there is a particularly acute need to transfer and cool, in the shortest possible time, the previously formed containers.

Generally, flexible containers comprise a pouch, usually made of polyethylene (PE), and a spout, able to allow the outflow of the product maintained within the container, for instance a drink or a fruit juice or other beverages.

This type of flexible container is formed starting from pouches provided with an opening, whereat a portion of the spout is inserted and secured within the pouch by sealing.

In particular, the sealing operation involves the edges of said opening and is performed by heating means which cause a partial melting of the edges themselves, causing them to adhere to the portion of the spout inserted into the pouch.

A particularly acute, and as yet unsolved, problem in the sector is the need to cool the seal area to prevent the crystallisation of the material whereof the pouch is made, to improve its mechanical resistance.

Secondly, there is a need to complete said cooling operation in the shortest possible time, to avoid any negative impacts on the efficiency of the production cycle.

GB 925 169A discloses a machine for producing liquid-filled packages, comprising a revolving platform with a plurality of stations for gripping the packages, whereby the platform rotates around a shaft comprising channels for cooling previously sealed portions of the containers with short blasts of compressed air. In such an arrangement, however, the air stream cannot reach the container portion covered by the gripping devices, and the control of cooling parameters is difficult.

US 4 640 406A discloses a rotational and retractable device for holding and conveying containers, wherein a plurality of holding devices extend in a linear fashion. The device comprises nozzles that are used for a spray coating of the container but cannot be used for cooling the welded seam.

EP 1 127 793A discloses a sealing method for containers, using rotating devices with revolving platforms, a plurality of stations for gripping the containers, whereby the previously sealed containers can be cooled by means of cooling plates which, however, are not actively cooled by air or a cooling fluid. Thus, the cooling temperature cannot be adjusted.

### DISCLOSURE OF THE INVENTION.

An object of the present invention is to eliminate the aforesaid drawbacks, making available a transfer star-wheel, in particular for flexible containers, and a method for cooling the aforesaid containers, which are able to operate, without negatively impacting on the productivity of the line for processing the containers.

Another object of the present invention is to propose a method for cooling containers which is able to optimise the productive cycle.

An additional object of the present invention is to obtain the above results within the scope of a rational, reliable and economical technical solution.

Said objects are fully achieved by the transfer star-wheel, in particular for flexible containers, and by the method for cooling the aforesaid containers, of the present invention, which are characterised by the content of the claims set out below.

### BEST MODE FOR CARRYING OUT THE INVENTION.

These and other features shall become more readily apparent from the following description of a preferred embodiment illustrated, purely by way of non limiting example, in the accompanying drawing tables, in which:
- Figure 1 shows a frontal section view of a transfer star-wheel, in particular for flexible containers;
- Figures 2, 3, 4 show three views of a constructive element associated to the transfer star-wheel shown in Figure 1, in three different operative configurations;
- Figure 5 shows a lateral view of the constructive element shown in Figure 4;

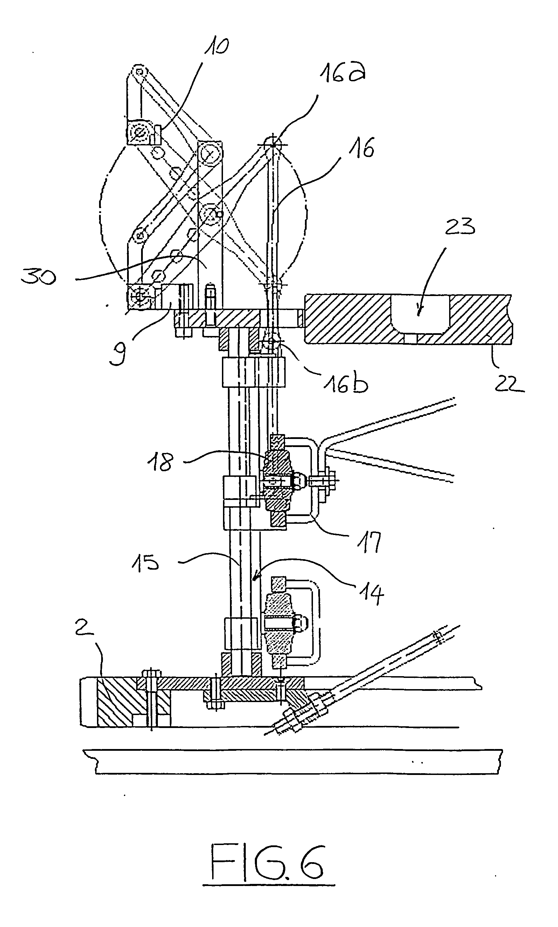

- Figure 6 shows a lateral view of a constructive detail of the transfer star-wheel shown in Figure 1.

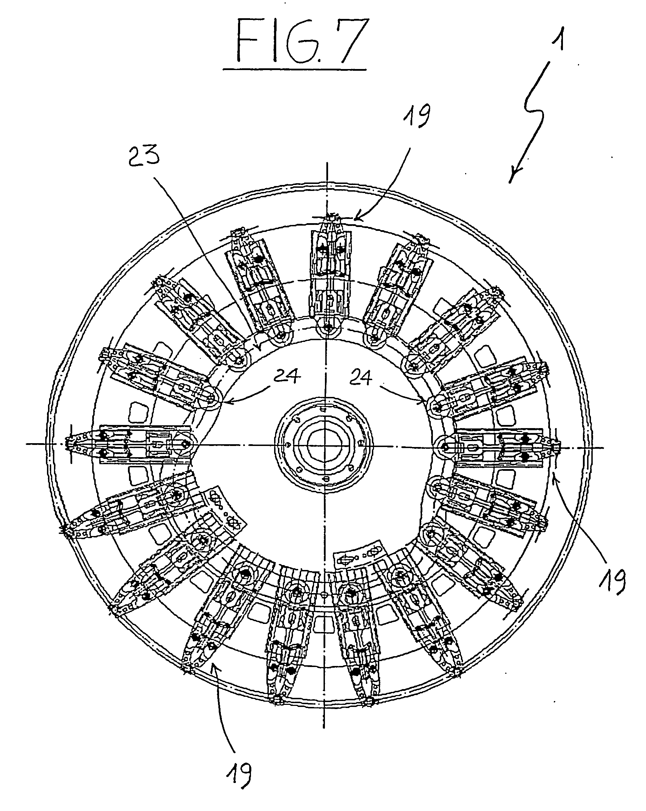

- Figure 7 shows a plan view of the transfer star-wheel shown in Figure 1.

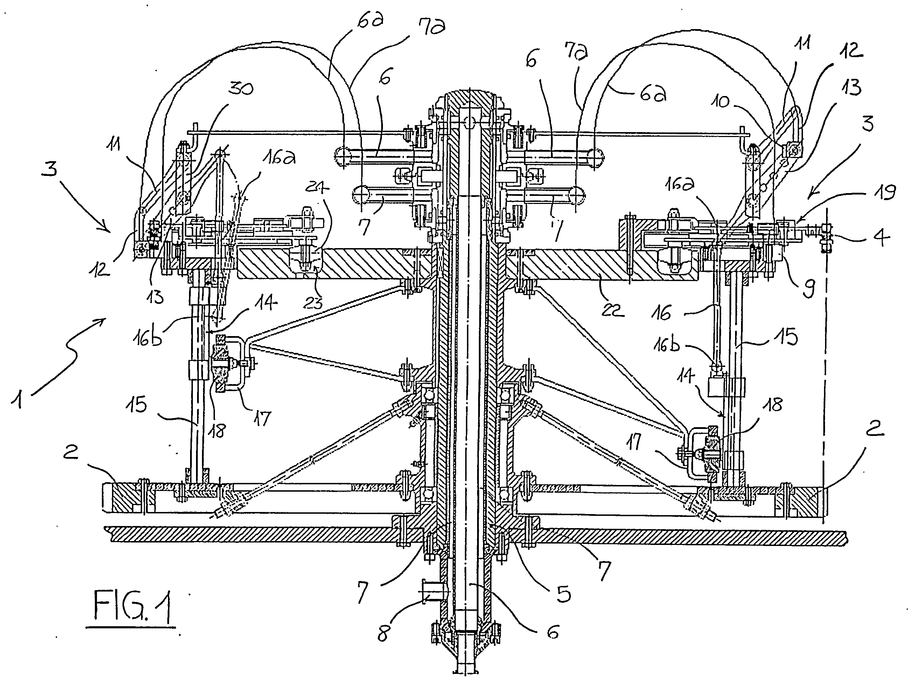

With particular reference to Figure 1, the transfer star-wheel according to the invention is globally designated with the number 1 and comprises a revolving platform 2 provided with a plurality of stations 3 for flexible containers, or pouch, each of which is provided with means for gripping the containers.

In particular, the revolving platform 2 is integrally connected to a supporting and rotating shaft 5.

In absolutely new and original fashion, the transfer star-wheel 1 comprises means for cooling previously sealed portions of the containers.

In the preferred embodiment, the means for cooling the aforesaid portions of the pouch comprise a pair of jaws 9, 10 able to approach and touch the aforesaid portions to be cooled.

Said cooling means further comprise a conduit 6 for delivering a cooling fluid to the jaws 9, 10, a conduit 7 for the return of said fluid and a conduit 8 for discharging the cooling fluid, after said fluid has thermally interacted with the jaws.

In the preferred embodiment, the delivery conduit 6 and the return conduit 7 are partially contained within the support shaft 5 of the revolving platform 2. In particular, both the delivery conduit 6 and the return conduit 7 comprise at least a part defined by flexible tubular bodies 6a, 7a, positioned externally to the support shaft 5.

In the illustrated example, the flexible tubular bodies 6a, 7a are directly connected to the jaws.

With particular reference to Figure 1, a first jaw 9 is fixed, whilst a second jaw 10 is movable away from the first one, in order to allow an insertion, between the jaws, of the sealed portions of a container.

In the preferred embodiment, each jaw 9,10 has a recessed portion, substantially concave, shaped complementarily to a convexity of the container present at the sealed portions. Said convexity is determined by the presence of a spout portion 4, embedded between the sealed edges of the container, as described in the prior art.

The star-wheel 1 comprises means for actuating the second jaw 10 to move it away from the first jaw 9.

In the preferred and illustrated embodiment, said actuating means comprise a plurality of rod-like elements 11, 12, 13 kinematically connected to each other to define substantially an articulated quadrilateral. In particular, the rod-like elements 11, 12 are hinged on an appendage 30 integrally connected to the fixed jaw 9, whilst the second jaw 10 is connected to at least one of the aforesaid rod-like elements 11, 12, 13.

The actuating means further comprise a cursor 14 slidably movable with reciprocating motion along a support guide 15, positioned on the revolving platform 2 at a pre-set distance from the support shaft 5.

Also present is a connecting rod 16 having a first end 16a connected to one of said rod-like elements 11, 12, 13 (specifically to the rod-like element designated by the number 13) and a second end 16b connected to the cursor 14.

The means for actuating the second jaw 10 further comprise a second guide 17 positioned around the support shaft 5 of the revolving platform 2 and within which is engaged a roller 18 pivotally engaged to the cursor 14. The guide 17 is substantially a desmodronic guide.

In the preferred and illustrated embodiment, the means for gripping the containers comprise a pincer 19 located on the support guide 15 and positioned on the revolving platform 2 at a pre-set distance from the support shaft 5.

In particular, the star-wheel 1 comprises means for moving each pincer 19 in a direction that is substantially radial to the revolving platform 2.

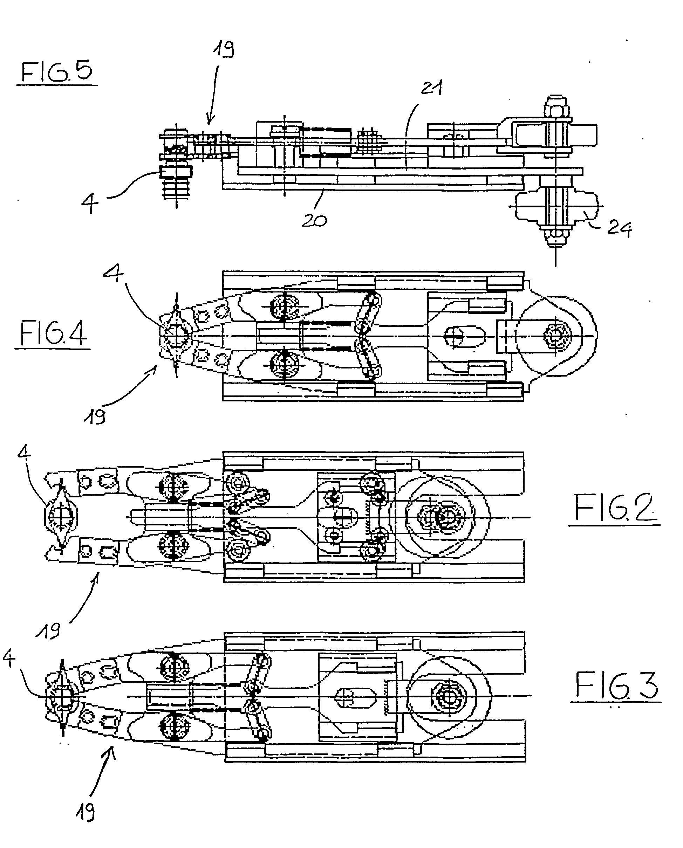

With particular reference to Figures 1 through 5, the means for moving each pincer 19 in the radial direction comprise a sliding seat 20 for a frame 21 of the pincer and a discoidal body 22, connected to the support shaft 5 and having a groove 23 which substantially defines a cam.

The means for moving each pincer 19 further comprise a roller 24 connected to the frame 21 of the pincer and slidably housed in the groove 23 present on the discoidal body 22.

The operation of the invention is as follows.

The containers are picked up from a forming and sealing station by means of the pincers 19.

Subsequently, the pincers 19 move rearwards in the radial direction towards the support shaft 5, by effect of the rotation of the platform 2 and of the simultaneous sliding of the roller 24 of the frame 21 of each pincer within the groove 23. In this way, the just sealed portions of the containers come in contact with the fixed jaw 9.

Simultaneously, the movable jaw 10, initially far from the fixed jaw 9 to allow the pincers to grab the container, is approached to the latter by effect of the vertical and upwards motion of the cursor 14 along the support guide 15.

Said movement of the cursor 14 is caused by the rotation of the platform 2 and by the simultaneous sliding of the roller 18 inside the guide 17, which is of the desmodronic type.

With particular reference to Figure 1, the movement of the cursor 14 thrusts the connecting rod 16 upwards, determining the rotation of the articulated quadrilateral constituted by the rod-like elements 11, 12, 13.

) The movable jaw 10 is moved away simply by inverting the direction of motion of the cursor 14, by means of an appropriate geometry of the desmodronic guide 17.

After positioning the sealed portions of the container between the jaws 9, 10, the cooling fluid, which circulates within the jaws, interacts thermally therewith, cooling said sealed portions.

The cooling fluid is sent to the jaws through the delivery conduit 6, 6a and it exits therefrom through the return conduit 7, 7a, which sends it to a discharge conduit 8.

The method for cooling flexible containers, of the present invention, comprises the steps of:
- collecting the flexible containers at the output of a first station for forming and sealing the containers;
- transferring the flexible containers from said first station to a second processing station.

In absolutely new and original fashion, the method is characterised in that it comprises a step of forced cooling of the flexible containers simultaneously with the step of transferring the containers.

In particular, the cooling step occurs by means of indirect heat exchange with a cooling fluid, preferably water at a temperature within a range of about 12°C to 20°C.

The invention achieves important advantages.

First of all, a transfer star-wheel and a method according to the invention allow to optimise the productivity of an installation.

Another advantage of the present invention is given by the fact that cooling the sealed portions allows to prevent the crystallisation of polyethylene, thereby improving the mechanical characteristics of the containers and safeguarding their integrity.

Advantageously, a transfer star-wheel in accordance with the invention solves the problem of cooling the flexible containers in an extremely rational and reliable manner.

## Claims

1. Transfer star-wheel (1), for transferring sealed, flexible containers, comprising:
at least a revolving platform (2);
a plurality of stations (3) for the containers positioned on said platform (2), each of which is provided with means for gripping the containers;
a shaft (5) for supporting the revolving platform (2),
means for cooling previously sealed portions of the containers, comprising at least a pair of jaws (9, 10) for gripping said portions of the containers,
**characterized in that**
said means for cooling previously sealed portions of the containers further comprise:
at least a conduit (6) for delivering a cooling fluid to at least one of said jaws (9, 10);
at least a conduit (7) for returning the cooling fluid from said jaw (9, 10); and
at least a conduit (8) for discharging the cooling fluid after it has thermally interacted with at least one jaw (9, 10).

2. A transfer star-wheel as claimed in claim 1, **characterised in that** said pair of jaws (9, 10) comprises a first fixed jaw (9) and a second jaw (10), movable away from the first one, to allow an insertion of the sealed portions of a container between said jaws (9, 10).

3. A transfer star-wheel as claimed in claim 2, **characterised in that** it comprises means for actuating said second jaw (10) to move it away from the first one.

4. A transfer star-wheel as claimed in claim 3, **characterised in that** said actuating means comprise: a plurality of rod-like elements (11, 12, 13) kinematically connected to each other in order substantially to define an articulated quadrilateral, two of said rod-like elements (11, 12, 13) being pivotally connected to an appendage (30) integrally connected to said fixed jaw (9), the second jaw (10) being connected to at least one of the rod-like elements (11, 12, 13); at least a cursor (14) slidably movable with reciprocating motion along a support guide (15), positioned on the rotating platform (2) at a pre-set distance from the support shaft (5); at least a rod (16) having a first end (16a) connected to at least one of the rod-like elements (11,12, 13) pivotally connected to the appendage (30) and a second end (16b) connected to said cursor (14); a second guide (17), serving substantially as a cam, positioned around the support shaft (5) of the revolving platform (2) and operatively active on a roller (18) pivotally engaged to said cursor (14).

5. A transfer star-wheel as claimed in claim 1, **characterised in that** said delivery conduit (6) and said return conduit (7) are at least partially contained within said support shaft (5) of the revolving platform (2).

6. A transfer star-wheel as claimed in claim 5, **characterised in that** the delivery conduit (6) is at least partially defined by a flexible tubular body (6a) positioned externally to the support shaft (5) of the revolving platform (2).

7. A transfer star-wheel as claimed in claim 5, **characterised in that** the return conduit (7) is at least partially defined by a flexible tubular body (7a) positioned externally to the support shaft (5) of the revolving platform (2).

8. A transfer star-wheel as claimed in claim 1, **characterised in that** the gripping means comprise at least a pincer (19) positioned on the revolving platform (2) at a pre-set distance from the support shaft (5).

9. A transfer star-wheel as claimed in claim 8, **characterised in that** it comprises means for moving each pincer (19) in a radial direction.

10. A transfer star-wheel as claimed in claim 9, **characterised in that** said means for moving each pincer (19) in a radial direction comprise: at least a sliding seat (20) for a frame (21) of the pincer (19); a discoidal body (22) connected to the support shaft (5) and having at least a groove (23) substantially defining a cam; at least a roller (24) connected to the frame (21) of the pincer (19) and slidably housed in said groove (23) present on the discoidal body (22).

11. A transfer star-wheel as claimed in claim 1, **characterised in that** the delivery conduit (6) and the return conduit (7) are directly connected to at least one of said jaws (9, 10).

12. A method for cooling flexible containers, using a transfer star-wheel as claimed in any one of claims 1 - 11, and comprising the steps of: collecting the flexible containers at the output of a first station for forming and sealing the containers; transferring the flexible containers from said first station to a second processing station,
**characterised in that**
it comprises a step of forced cooling of the flexible containers simultaneously with said step of transferring the containers, and
said cooling step occurs by indirect heat exchange with a cooling fluid.

13. A method as claimed in claim 12, **characterised in that** said cooling fluid is water at a temperature within a range of about 12° C to 20° C.

## Patentansprüche

1. Transfer-Sternrad (1) zum Überführen verschlossener flexibler Behälter, das umfasst:
wenigstens eine Drehplattform (2);
eine Vielzahl von Stationen (3) für die auf der Plattform (2) positionierten Behälter, von denen jede mit Einrichtungen zum Ergreifen der Behälter versehen ist;
eine Welle (5), die die Drehplattform (2) trägt,
eine Einrichtung zum Kühlen zuvor verschlossener Abschnitte der Behälter, die wenigstens ein Paar Klauen (9, 10) zum Ergreifen der Abschnitte der Behälter umfasst,
**dadurch gekennzeichnet, dass**
die Einrichtung zum Kühlen zuvor verschlossener Abschnitte der Behälter des Weiteren umfasst:
wenigstens eine Leitung (6) zum Zuführen eines Kühlfluids zu wenigstens einer der Klauen (9, 10);
wenigstens eine Leitung (7) zum Rückführen des Kühlfluids von der Klaue (9, 10); und
wenigstens eine Leitung (8) zum Abgeben des Kühlfluids, nachdem es thermisch in Wechselwirkung mit wenigstens einer Klaue (9, 10) getreten ist.

2. Transfer-Sternrad nach Anspruch 1, **dadurch gekennzeichnet, dass** das Paar Klauen (9, 10) eine erste stationäre Klaue (9) und eine zweite Klaue (10) umfasst, die von der ersten wegbewegt werden kann, um ein Einführen der verschlossenen Abschnitte eines Behälters zwischen die Klauen (9, 10) zu ermöglichen.

3. Transfer-Sternrad nach Anspruch 2, **dadurch gekennzeichnet, dass** es eine Einrichtung umfasst, mit der die zweite Klaue (10) betätigt wird, um sie von der ersten weg zu bewegen.

4. Transfer-Sternrad nach Anspruch 3, **dadurch gekennzeichnet, dass** die Betätigungseinrichtung umfasst:
eine Vielzahl stangenartiger Elemente (11, 12, 13), die kinematisch miteinander verbunden sind, um im Wesentlichen ein Gelenkviereck zu bilden, wobei zwei der stangenartigen Elemente (11, 12, 13) schwenkbar mit einem Ansatz (30) verbunden sind, der integral mit der stationären Klaue (9) verbunden ist, die zweite Klaue (10) mit wenigstens einem der stangenartigen Elemente (11, 12, 13) verbunden ist; wenigstens einen Läufer (14), der verschiebbar an einer Trageführung (15) hin und her bewegt werden kann, die auf der Drehplattform (2) in einem voreingestellten Abstand zu der Tragewelle (5) angeordnet ist; wenigstens eine Stange (16) mit einem ersten Ende (16a), das mit wenigstens einem der stangenartigen Elemente (11, 12, 13) verbunden ist, die schwenkbar mit dem Ansatz (30) verbunden sind, und einem zweiten Ende (16b), das mit dem Läufer (14) verbunden ist; eine zweite Führung (17), die im Wesentlichen als eine Kurve dient, um die Tragewelle (5) der Drehplattform (2) herum angeordnet ist und in Funktion auf eine Rolle (18) einwirkt, die schwenkbar mit dem Läufer (14) in Eingriff ist.

5. Transfer-Sternrad nach Anspruch 1, **dadurch gekennzeichnet, dass** die Zuführleitung (6) und die Rückführleitung (7) wenigstens teilweise in der Tragewelle (5) der Drehplattform (2) aufgenommen sind.

6. Transfer-Sternrad nach Anspruch 5, **dadurch gekennzeichnet, dass** die Zuführleitung (6) wenigstens teilweise durch einen flexiblen röhrenförmigen Körper (6a) gebildet wird, der außerhalb der Tragewelle (5) der Drehplattform (2) angeordnet ist.

7. Transfer-Sternrad nach Anspruch 5, **dadurch gekennzeichnet, dass** die Rückführleitung (7) wenigstens teilweise durch einen röhrenförmigen flexiblen Körper (7a) gebildet wird, der außerhalb der Tragewelle (5) der Drehplattform (2) angeordnet ist.

8. Transfer-Sternrad nach Anspruch 1, **dadurch gekennzeichnet, dass** die Greifeinrichtung wenigstens eine Zange (19) umfasst, die an der Drehplattform (2) in einem voreingestellten Abstand zu der Tragewelle (5) angeordnet ist.

9. Transfer-Sternrad nach Anspruch 8, **dadurch gekennzeichnet, dass** es eine Einrichtung zum Bewegen jeder Zange (19) in einer radialen Richtung umfasst.

10. Transfer-Sternrad nach Anspruch 9, **dadurch gekennzeichnet, dass** die Einrichtung zum Bewegen jeder Zange (19) in einer radialen Richtung umfasst:
wenigstens einen Gleitsitz (20) für einen Rahmen (21) der Zange (19); einen scheibenförmigen Körper (22), der mit der Tragewelle (5) verbunden ist und wenigstens eine Nut (23) aufweist, die im Wesentlichen eine Kurve bildet; wenigstens eine Rolle (24), die mit dem Rahmen (21) der Zange (19) verbunden ist und gleitend in der Nut (23) aufgenommen ist, die an dem scheibenförmigen Körper (22) vorhanden ist.

11. Transfer-Sternrad nach Anspruch 1, **dadurch gekennzeichnet, dass** die Zuführleitung (6) und die Rückführleitung (7) direkt mit wenigstens einer der Klauen (9, 10) verbunden sind.

12. Verfahren zum Kühlen flexibler Behälter unter Verwendung eines Transfer-Sternrades nach einem der Ansprüche 1-11, das die folgenden Schritte umfasst:
Sammeln der flexiblen Behälter am Ausgang einer ersten Station zum Formen und Verschließen der Behälter;
Überführen der flexiblen Behälter von der ersten Station zu einer zweiten Verarbeitungsstation,
**dadurch gekennzeichnet, dass**
sie einen Schritt des Zwangskühlens der flexiblen Behälter simultan zu dem Schritt des Überführens der Behälter umfasst, und
der Kühlschritt durch indirekten Wärmeaustausch mit einem Kühlfluid stattfindet.

13. Verfahren nach Anspruch 12, **dadurch gekennzeichnet, dass** das Kühlfluid Wasser auf einer Temperatur in einem Bereich von ungefähr 12°C bis 20°C ist.

## Revendications

1. Étoile de transfert (1) permettant de transférer des récipients souples scellés comprenant :
au moins une plate-forme tournante (2),
une pluralité de postes (3) pour les récipients positionnés sur ladite plate-forme (2), dont chacun est muni de moyens pour saisir les récipients, un arbre (5) pour supporter la plate-forme tournante (2),
des moyens destinés à refroidir des parties précédemment scellées des récipients, comprenant au moins une paire de mâchoires (9, 10) pour saisir lesdites parties des récipients,
**caractérisée en ce que**
lesdits moyens destinés à refroidir des parties précédemment scellées des récipients comprennent en outre :
au moins un conduit (6) pour amener un fluide de refroidissement à au moins une desdites mâchoires (9, 10),
au moins un conduit (7) pour retourner le fluide de refroidissement en provenance de ladite mâchoire (9, 10), et
au moins un conduit (8) pour décharger le fluide de refroidissement après qu'il a thermiquement interagi avec au moins une mâchoire (9, 10).

2. Étoile de transfert telle que revendiquée dans la revendication 1, **caractérisée en ce que** ladite paire de mâchoires (9, 10) comprend une première mâchoire fixe (9) et une deuxième mâchoire (10) pouvant être écartée de la première pour permettre une insertion des parties scellées d'un récipient entre lesdites mâchoires (9, 10).

3. Étoile de transfert telle que revendiquée dans la revendication 2, **caractérisée en ce qu'**elle comprend des moyens destinés à actionner ladite deuxième mâchoire (10) pour l'écarter de la première.

4. Étoile de transfert telle que revendiquée dans la revendication 3, **caractérisée en ce que** lesdits moyens d'actionnement comprennent: une pluralité d'éléments en forme de tige (11, 12, 13) cinématiquement reliés les uns aux autres afin de définir essentiellement un quadrilatère articulé, deux des éléments en forme de tige (11, 12, 13) étant reliés de manière pivotante à un appendice (30) intégralement relié à ladite mâchoire fixe (9), la deuxième mâchoire (10) reliée à au moins un des éléments en forme de tige (11, 12, 13), au moins un curseur (14) pouvant être déplacé de manière coulissante par un mouvement alternatif le long d'un guide de support (15), positionné sur la plate-forme tournante (2) à une distance pré-établie de l'arbre de support (5), au moins une tige (16) ayant une première extrémité (16a) reliée à au moins un des éléments en forme de tige (11, 12, 13) reliés de manière pivotante à l'appendice (30) et une deuxième extrémité (16b) reliée audit curseur (14), un deuxième guide (17) servant essentiellement de came, positionné autour de l'arbre de support (5) de la plate-forme tournante (2) et opérationnellement actif sur un rouleau (18) en prise de manière pivotante avec ledit curseur (14).

5. Étoile de transfert telle que revendiquée dans la revendication 1, **caractérisée en ce que** ledit conduit d'amenée (6) et ledit conduit de retour (7) sont contenus au moins en partie à l'intérieur dudit arbre de support (5) de la plate-forme tournante (2).

6. Étoile de transfert telle que revendiquée dans la revendication 5, **caractérisée en ce que** le conduit d'amenée (6) est défini au moins en partie par un corps tubulaire souple (6a) positionné à l'extérieur de l'arbre de support (5) de la plate-forme tournante (2).

7. Étoile de transfert telle que revendiquée dans la revendication 5, **caractérisée en ce que** le conduit de retour (7) est défini au moins en partie par un corps tubulaire souple (7a) positionné à l'extérieur de l'arbre de support (5) de la plate-forme tournante (2).

8. Étoile de transfert telle que revendiquée dans la revendication 1, **caractérisée en ce que** les moyens de saisie comprennent au moins une pince (19) positionnée sur la plate-forme tournante (2) à une distance pré-établie de l'arbre de support (5).

9. Étoile de transfert telle que revendiquée dans la revendication 8, **caractérisée en ce qu'**elle comprend des moyens destinés à déplacer chaque pince (19) dans une direction radiale.

10. Étoile de transfert telle que revendiquée dans la revendication 9, **caractérisée en ce que** lesdits moyens destinés à déplacer chaque pince (19) dans une direction radiale comprend: au moins un siège coulissant (20) pour un cadre (21) de la pince (19), un corps discoïde (22) relié à l'arbre de support (5) et ayant au moins une gorge (23) définissant essentiellement une came, au moins un rouleau (24) relié au cadre (21) de la pince (19) et logé de manière coulissante dans ladite gorge (23) présente sur le corps discoïde (22).

11. Étoile de transfert telle que revendiquée dans la revendication 1, **caractérisée en ce que** le conduit d'amenée (6) et le conduit de retour (7) sont directement reliés à au moins une desdites mâchoires (9, 10).

12. Procédé pour refroidir des récipients souples, utilisant une étoile de transfert telle que revendiquée dans l'une quelconque des revendications 1-11, et comprenant les étapes consistant à collecter les récipients souples à la sortie d'un premier poste pour former et sceller les récipients, à transférer les récipients souples dudit premier poste à un deuxième poste de traitement,
**caractérisé en ce que**
il comprend une étape de refroidissement forcé des récipients souples qui s'effectue en même temps que ladite étape de transfert des récipients, et
ladite étape de refroidissement a lieu par échange indirect de chaleur avec un fluide de refroidissement.

13. Procédé tel que revendiqué dans la revendication 12, **caractérisé en ce que** ledit fluide de refroidissement est de l'eau à une température dans une plage d'environ 12° C à 20° C.
